# EUROPEAN PATENT APPLICATION

(11) **EP 2 264 616 A1**
(43) Date of publication of application: **22.12.2010**
(21) Application number: 10165327.7
(22) Date of filing: 09.06.2010
(51) Int. Cl.: G06F 17/30

(54) **Methods for browsing image data and systems using the same**

(30) Priority: 19.06.2009 TW 98120586
(71) Applicant: HTC Corporation, Taoyuan County 330 (TW)
(72) Inventor: Chen, Hsueh-Chun, 330, Taoyuan City Taoyuan County (TW)
(74) Representative: 2K Patentanwälte Blasberg Kewitz & Reichel

(57) **Abstract**

Methods for browsing image data and systems using the same are provided. First, all or a part of image data is browsed in a display unit. Each of the image data has attribute data. Then, one of the image data displayed in the display unit is determined, and the attribute data of the determined image data is obtained. The obtained attribute data is displayed in the display unit.

## Description

### CROSS REFERENCE TO RELATED APPLICATIONS

This Application claims priority of Taiwan Patent Application No. 098120586, filed on June 19, 2009, the entirety of which is incorporated by reference herein.

### BACKGROUND OF THE INVENTION

### Field of the Invention

The disclosure relates generally to methods for browsing image data and systems using the same, and, more particularly to methods that display attribute data of image data, and browse image data according to the displayed attribute data, and systems using the same.

### Description of the Related Art

Recently, portable devices, such as handheld devices, have become more and more technically advanced and multifunctional. For example, a handheld device may have telecommunication capabilities, e-mail message capabilities, an advanced address book management system, a media playback system, and various other functions. Due to increased convenience and functions of the devices, these devices have become necessities of life.

Generally, a handheld device may be equipped with a touch-sensitive display unit. Users can directly perform related operations, such as application operations and data input via the touch-sensitive display unit. For example, a user can move his finger on the touch-sensitive display unit to browse image data in the device. Currently, no information is provided for users during the browsing of image data. Users must observe the content of the image data displayed in the touch-sensitive display unit to determine the browse status. The conventional browse procedure for image data is inconvenient for users.

### BRIEF SUMMARY OF THE INVENTION

Methods for browsing image data and systems using the same are provided.

In an embodiment of a method for browsing image data, all or a part of image data is browsed in a display unit. Each of the image data has attribute data. Then, one of the image data displayed in the display unit is determined, and the attribute data of the determined image data is obtained. The obtained attribute data is displayed in the display unit.

An embodiment of a system for browsing image data includes a storage unit, a display unit, and a processing unit. The storage unit includes a plurality of image data. Each of the image data has attribute data. The processing unit displays all or a part of image data, such that the displayed image data is browsed. The processing unit determines one of the image data displayed in the display unit, and obtains the attribute data of the determined image data. The processing unit displays the obtained attribute data via the display unit.

In some embodiments, the determined image data is displayed at a specific position of the display unit. In some embodiments, the determined image data is the first image data displayed in the display unit.

In some embodiments, the obtained attribute data is displayed at a contact position corresponding to an object near or on the display unit.

Methods for browsing image data and systems using the same may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a system for browsing image data of the invention;

Fig. 2 is a flowchart of an embodiment of a method for browsing image data of the invention;

Figs. 3A and 3B are schematic diagrams illustrating an embodiment of an example of browse for image data of the invention.

### DETAILED DESCRIPTION OF THE INVENTION

Methods for browsing image data and systems using the same are provided.

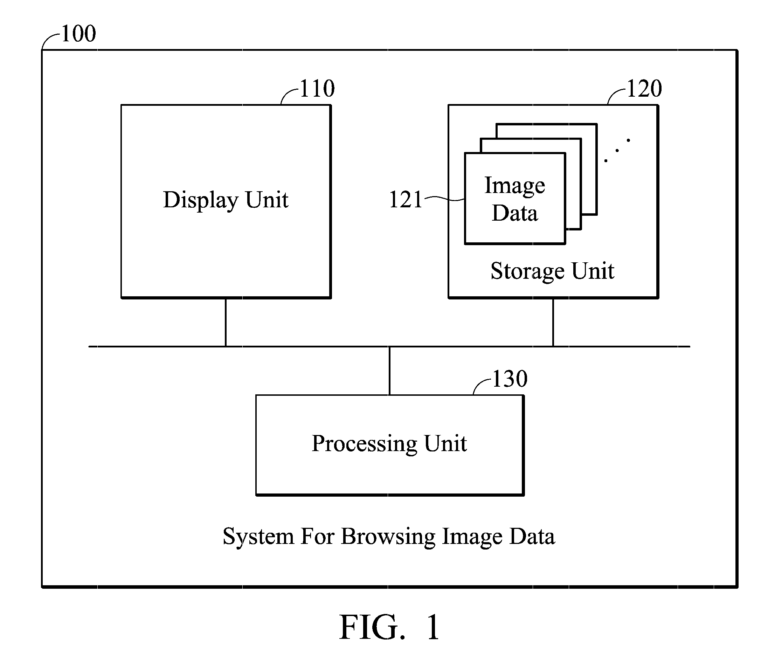

Fig. 1 is a schematic diagram illustrating an embodiment of a system for browsing image data of the invention. The system for browsing image data 100 can be used in an electronic device, such as a portable device comprising handheld devices such as a PDA (Personal Digital Assistant), a smart phone, a mobile phone, a MID (Mobile Internet Device, MID), and a Netbook.

The system for browsing image data 100 comprises a display unit 110, a storage unit 120, and a processing unit 130. In some embodiments, the display unit 110 may be integrated with a touch-sensitive device (not shown) to form a touch-sensitive display unit. The touch-sensitive device has a touch-sensitive surface comprising sensors in at least one dimension to detect contact and movement of an input tool (object), such as a stylus or finger on the touch-sensitive surface. The touch-sensitive display unit 110 can display related data, and/or related figures and interfaces. The storage unit 120 comprises image data 121, which can be provided to the display unit 110 for display. The image data 121 may comprise photos, thumbnails of photos, videos, and/or representative figures corresponding to videos. It is understood that, each image data may comprise attribute data, such as a name, data information, and capturing information, such as EXIF (EXchangable Image File) information. The processing unit 130 performs the method for browsing image data of the invention, which will be discussed further in the following paragraphs.

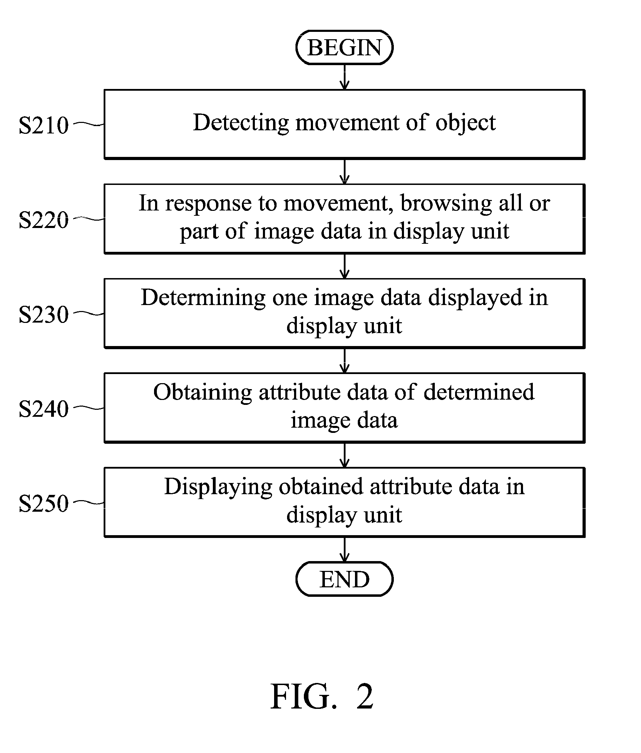

Fig. 2 is a flowchart of an embodiment of a method for browsing image data of the invention. The method for browsing image data can be used for an electronic device, such as a portable device comprising handheld devices such as a PDA, a smart phone, a mobile phone, a MID, and a Netbook. It is noted that, in this embodiment, the electronic device may have a touch-sensitive display unit.

In step S210, a movement of an object, such as finger or stylus near or on the touch-sensitive display unit is detected. In step S220, in response to the movement, all or a part of image data is browsed in the touch-sensitive display unit. Similarly, the image data may comprise photos, thumbnails of photos, videos, and/or representative figures corresponding to videos, and each image data may comprise attribute data, such as a name, data information, and/or capturing information. It is understood that, the touch-sensitive display unit may have a display area with a specific size, and each image data may have a size. In some situations, the touch-sensitive display unit can display a part of the image data at a time. Additionally, it is understood that, in some embodiments, the image data browsed in the touch-sensitive displayed unit can be first sorted according to a parameter, such as a name or data information, and displayed in the touch-sensitive displayed unit in sequence. Then, in step S230, one of the image data displayed in the touch-sensitive displayed unit is determined. It is understood that, in some embodiments, the determined image data can be displayed at a specific position, such as the upper left corner, the upper right corner, the lower left corner, the lower right corner, the upper position, or the lower position of the touch-sensitive displayed unit. Additionally, in some embodiments, the determined image data is the first image data displayed in the touch-sensitive display unit. After the image data is determined, in step S240, the attribute data of the determined image data is obtained, and in step S250, the obtained attribute data is displayed in the touch-sensitive display unit. It is understood that, in some embodiments, the obtained attribute data can be displayed at a contact position corresponding to the object near or on the touch-sensitive display unit. It is noted that, during the browsing of image data, steps S210 to 5250 can be repeated until the browsing of image data is completed.

It is understood that, in the embodiment of Fig. 2, an object can be moved on the touch-sensitive display unit to scroll (browse) image data. However, in some embodiments, the scroll (browse) of image data can be performed by operating a scroll bar using an input tool, such as a mouse. Additionally, in some embodiments, the display unit can display an icon or figure representing image data can be scrolled. When the icon or figure is selected, a scroll bar, and/or a display zone for displaying attribute data are displayed. Then, users can use an input tool, such as a mouse and/or an object to browse image data in the display unit, and the obtained attribute data can be displayed in the display zone. Further, in some embodiments, after the attribute data of the determined image data is obtained, the image data can be filtered according to the obtained attribute data, and all or a part of the filtered image data can be displayed in the display unit.

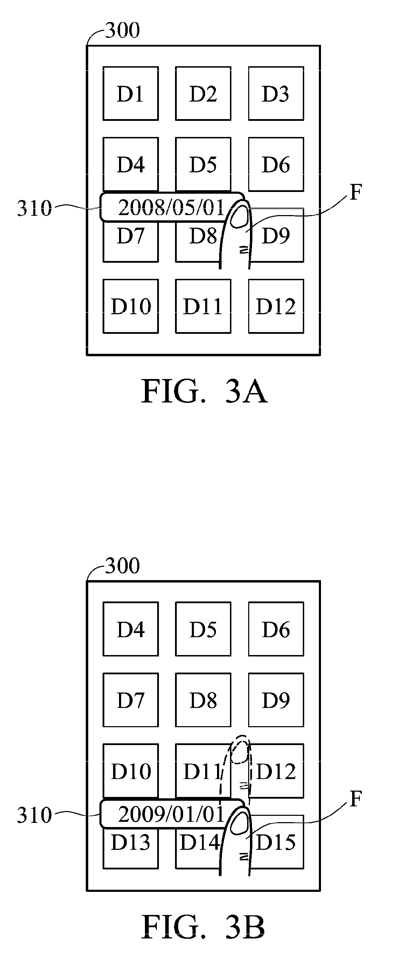

For example, a finger F can be placed near or on a touch-sensitive display unit 300, thus to browse image data, as shown in Fig. 3A. In Fig. 3A, image data D1 to D12 is displayed in the touch-sensitive display unit 300. When the specific position of the touch-sensitive display unit 300 is the upper left corner, image data D1 is determined, and the attribute data, such as the date information (2008/05/01) of image data D1 is obtained, and displayed in the display area 310 at a position corresponding to the contact position of the finger F of the touch-sensitive display unit 300. Then, the finger F can be moved downward, as shown in Fig. 3B. After the finger F is moved downward, image data D4 to D15 is displayed in the touch-sensitive display unit 300. At this time, image data D4 is determined, and the attribute data, such as the date information (2009/01/01) of image data D4 is obtained, and displayed in the display area 310 at a position corresponding to the contact position of the finger F of the touch-sensitive display unit 300.

Therefore, the methods for browsing image data and systems using the same can display attribute data of image data, and browse image data according to the displayed attribute data, thus increasing convenience during the browsing of image data.

Methods for browsing image data and systems using the same, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A method for browsing image data for use in an electronic device, comprising:
providing a plurality of image data, wherein each of the image data comprise attribute data;
browsing all or a part of the image data in a display unit;
determining one of the image data displayed in the display unit;
obtaining the attribute data of the determined image data; and
displaying the obtained attribute data in the display unit.

2. The method of claim 1, wherein the determined image data is displayed at a specific position of the display unit.

3. The method of claim 1, wherein the determined image data is the first image data displayed in the display unit.

4. The method of claim 1, wherein the obtained attribute data is displayed at a position corresponding to a contact point of an object in the display unit.

5. The method of claim 1, further comprising:
filtering the image data according to the obtained attribute data; and
displaying all or a part of the filtered image data in the display unit.

6. The method of claim 1, wherein the image data displayed in the display unit is first sorted according to a parameter, wherein the parameter comprises a name, and date information.

7. A system for browsing image data for use in an electronic device, comprising:
a storage unit comprising a plurality of image data, wherein each of the image data comprise attribute data;
a touch-sensitive display unit; and
a processing unit displaying all or a part of the image data in the display unit for browsing, determining one of the image data displayed in the display unit, obtaining the attribute data of the determined image data, and displaying the obtained attribute data in the display unit.

8. The system of claim 11, wherein the determined image data is displayed at a specific position of the display unit.

9. The system of claim 11, wherein the determined image data is the first image data displayed in the display unit.

10. The system of claim 11, wherein the obtained attribute data is displayed at a position corresponding to a contact point of an object in the display unit.

11. The system of claim 11, wherein the processing unit further filters the image data according to the obtained attribute data, and displays all or a part of the filtered image data in the display unit.

12. The system of claim 11, wherein the image data displayed in the display unit is first sorted according to a parameter, wherein the parameter comprises a name, and date information.

13. A machine-readable storage medium comprising a computer program, which, when executed, causes a device to perform a method for browsing image data, and the method comprises:
browsing all or a part of image data in a display unit, wherein each of the image data comprise attribute data;
determining one of the image data displayed in the display unit;
obtaining the attribute data of the determined image data; and
displaying the obtained attribute data in the display unit.
